# EUROPEAN PATENT APPLICATION

(11) **EP 4 410 741 A1**
(43) Date of publication of application: **07.08.2024**
(21) Application number: 21959502.2
(22) Date of filing: 08.12.2021
(51) Int. Cl.: C01B 17/16, C01B 17/28

(54) **HYDROGEN SULFIDE PURIFICATION METHOD, LITHIUM SULFIDE PRODUCTION METHOD, HYDROGEN SULFIDE PURIFICATION DEVICE, AND LITHIUM SULFIDE PRODUCTION DEVICE**

(30) Priority: 30.09.2021 JP 2021161521
(71) Applicant: AGC INC., Chiyoda-ku, Tokyo 1008405 (JP)
(72) Inventor: ANDO, Ryota, Tokyo 100-8405 (JP)
(74) Representative: Müller-Boré & Partner Patentanwälte PartG mbB
(86) International application number: PCT/JP2021/045221
(87) International publication number: WO 2023/053468

(57) **Abstract**

The present invention pertains to a hydrogen sulfide purification method for removing a lithium starting material from a mixed gas (101) containing the lithium starting material and unreacted hydrogen sulfide, the mixed gas (101) being generated during the process of producing lithium sulfide by reacting hydrogen sulfide with the lithium starting material.

## Description

### TECHNICAL FIELD

The present invention relates to a hydrogen sulfide purification method, a lithium sulfide production method, a hydrogen sulfide purification device, and a lithium sulfide production device.

### BACKGROUND ART

Lithium sulfide (Li₂S) is used as, for example, a solid electrolyte of a lithium secondary battery. As a lithium sulfide production method, for example, a production method of reacting lithium hydroxide or the like as a lithium raw material with hydrogen sulfide in a disk dryer (for example, see Patent Literature 1) is known.

A sulfurization reaction between the lithium raw material and a hydrogen sulfide gas can be represented by the following formulae (1) to (3), for example.

2LiOH + H₂S → Li₂S + 2H₂O (1)

Li₂CO₃ + H₂S → Li₂S + H₂O + CO₂ (2)

Li₂O + H₂S → Li₂S + H₂O (3)

Further, for sulfur recovery in which hydrogen sulfide is recovered as elemental sulfur, the Claus process is well known. In the Claus process, first, the hydrogen sulfide is partially burned with air in a reaction furnace to generate a mixed gas containing 1 volume of sulfur dioxide per 2 volumes of hydrogen sulfide. Subsequently, the mixed gas is passed through a catalyst bed filled with a catalyst such as natural bauxite, activated alumina, titanium dioxide, or the like to generate vaporized elemental sulfur. Further, the vaporized sulfur is recovered as molten sulfur by a cooling operation.

A reaction between the reaction furnace and the catalyst bed can be represented by the following formulae (i) and (ii).

Reaction furnace: 3H₂S + 3/2O₂ → 2H₂S + SO₂ + H₂O (i)

Catalyst bed: 2H₂S + SO₂ → 3S + 2H₂O (ii)

### CITATION LIST

### PATENT LITERATURE

Patent Literature 1: JP2017-222567A

### SUMMARY OF INVENTION

### TECHNICAL PROBLEM

However, in the sulfurization reaction represented by the formulae (1) to (3), when unreacted H₂S remaining without being involved in the sulfurization reaction is subjected to sulfur recovery by the Claus process, there is a problem that a Claus catalyst contributing to the reaction represented by the formula (ii) is poisoned.

As a result of studies by the present inventors, it has been found that the poisoning of the Claus catalyst is caused by the lithium raw material contained in the unreacted H₂S. For example, in the technique disclosed in Patent Literature 1, the lithium raw material is adjusted to have a particle diameter of 0. 1 mm or more and 1.5 mm or less from the viewpoint of reaction efficiency and the like. However, such fine powder particles tend to diffuse into the unreacted H₂S in the disk dryer, and as a result, the finely powdered lithium raw material is mixed into the unreacted H₂S.

Further, when the finely powdered lithium raw material and moisture coexist, there is another problem that a metal pipe or the like is corroded.

Therefore, an object of the present invention is to provide a hydrogen sulfide purification method that can prevent poisoning of a Claus catalyst and preventing corrosion of a metal pipe during sulfur recovery using unreacted hydrogen sulfide which is generated in a process of producing lithium sulfide by a reaction of hydrogen sulfide and a lithium raw material.

### SOLUTION TO PROBLEM

The present invention is as follows.
(1) A hydrogen sulfide purification method including removing a lithium raw material from a mixed gas which is generated in a process of producing lithium sulfide by a reaction of hydrogen sulfide and the lithium raw material and includes unreacted hydrogen sulfide and the lithium raw material.
   An aspect of the present invention also provides a hydrogen sulfide purification method, a lithium sulfide production method, a hydrogen sulfide purification device, and a lithium sulfide production device described in the following (2) to (13).
(2) The hydrogen sulfide purification method according to (1), in which a cleaning liquid is brought into contact with the mixed gas to remove the lithium raw material from the mixed gas.
(3) The hydrogen sulfide purification method according to (2), in which the cleaning liquid includes hydrogen sulfide.
(4) The hydrogen sulfide purification method according to (2) or (3), in which the cleaning liquid includes calcium chloride.
(5) The hydrogen sulfide purification method according to any one of (2) to (4), in which the cleaning liquid has a pH of 4 to 9.
(6) The hydrogen sulfide purification method according to any one of (2) to (5), the method further including reducing a droplet size of the cleaning liquid.
(7) The hydrogen sulfide purification method according to (6), in which a flow rate of the mixed gas is increased to reduce the droplet size of the cleaning liquid by a shearing force between the mixed gas and the cleaning liquid.
(8) The hydrogen sulfide purification method according to any one of (2) to (7), in which a moisture in the mixed gas from which the lithium raw material is removed is 10 mass% or less.
(9) The hydrogen sulfide purification method according to (1), in which an amine solution is brought into contact with the mixed gas, the hydrogen sulfide in the mixed gas is absorbed into the amine solution, and the hydrogen sulfide is released from the amine solution into which the hydrogen sulfide is absorbed.
(10) A lithium sulfide production method including reacting hydrogen sulfide including hydrogen sulfide obtained by the hydrogen sulfide purification method according to any one of (1) to (9) with a lithium raw material to produce lithium sulfide.
(11) A lithium sulfide production method including reacting a lithium raw material including a lithium raw material recovered by the hydrogen sulfide purification method according to any one of (1) to (9) with hydrogen sulfide to produce lithium sulfide.
(12) A hydrogen sulfide purification device including:
   a lithium sulfide generation unit configured to generate lithium sulfide by reacting hydrogen sulfide with a lithium raw material;
   a mixed gas recovery unit configured to recover a mixed gas including unreacted hydrogen sulfide and the lithium raw material in the lithium sulfide generation unit; and
   a hydrogen sulfide purification unit configured to purify the hydrogen sulfide by removing the lithium raw material from the mixed gas.
(13) A lithium sulfide production device including:
   a lithium sulfide generation unit configured to generate lithium sulfide by reacting hydrogen sulfide with a lithium raw material;
   a mixed gas recovery unit configured to recover a mixed gas including unreacted hydrogen sulfide and the lithium raw material in the lithium sulfide generation unit;
   a hydrogen sulfide purification unit configured to purify the hydrogen sulfide by removing the lithium raw material from the mixed gas; and
   a hydrogen sulfide supply unit configured to supply the hydrogen sulfide obtained by the hydrogen sulfide purification unit to the lithium sulfide generation unit.

### ADVANTAGEOUS EFFECTS OF INVENTION

According to an aspect of the present invention, the lithium raw material is removed from the mixed gas containing the unreacted hydrogen sulfide and the lithium raw material during sulfur recovery using the unreacted hydrogen sulfide which is generated in a process of producing lithium sulfide by the reaction of the hydrogen sulfide and the lithium raw material. Therefore, it is possible to provide a hydrogen sulfide purification method capable of preventing poisoning of a Claus catalyst and preventing corrosion of a metal pipe.

### BRIEF DESCRIPTION OF DRAWINGS

[FIG. 1] FIG. 1 is a schematic view of a reaction tank for explaining a lithium sulfide producing process and a lithium sulfide generation unit.
[FIG. 2] FIG. 2 is a schematic view for explaining a process and a device for recovering a mixed gas containing unreacted hydrogen sulfide and a lithium raw material and removing the lithium raw material to purify hydrogen sulfide.
[FIG. 3] FIG. 3 is a schematic view showing a wet spray tower and a hydrogen sulfide purification unit provided in the wet spray tower.
[FIG. 4] FIG. 4 is a schematic view showing another form of the hydrogen sulfide purification unit provided in the wet spray tower.
[FIG. 5] FIG. 5 is a schematic view showing another form of the hydrogen sulfide purification unit provided in the wet spray tower.
[FIG. 6] FIG. 6 is a schematic view showing another form of the hydrogen sulfide purification unit provided in the wet spray tower.

### DESCRIPTION OF EMBODIMENTS

Hereinafter, embodiments of the present invention will be described in more detail.

A hydrogen sulfide purification method according to an aspect of the present invention includes removing a lithium raw material from a mixed gas containing unreacted hydrogen sulfide which is generated in a process of producing lithium sulfide by a reaction of hydrogen sulfide and the lithium raw material and the lithium raw material.

A hydrogen sulfide purification device according to an aspect of the present invention includes: a lithium sulfide generation unit configured to generate lithium sulfide by reacting hydrogen sulfide with a lithium raw material; a mixed gas recovery unit configured to recover a mixed gas containing unreacted hydrogen sulfide and a lithium raw material in the lithium sulfide generation unit; and a hydrogen sulfide purification unit configured to purify hydrogen sulfide by removing the lithium raw material from the mixed gas.

As described above, a sulfurization reaction of the lithium raw material and a hydrogen sulfide gas is used for production of lithium sulfide, and the sulfurization reaction can be represented by the following formulae (1) to (3), for example. In the following formula (1), LiOH is described as the lithium raw material, but the present invention is not limited thereto.

2LiOH + H₂S → Li₂S + 2H₂O (1)

Li₂CO₃ + H₂S → Li₂S + H₂O + CO₂ (2)

Li₂O + H₂S → Li₂S + H₂O (3)

Here, in the mixed gas containing the unreacted hydrogen sulfide and the lithium raw material according to the present invention, the unreacted hydrogen sulfide means unreacted hydrogen sulfide which remains without being involved in the sulfurization reaction represented by the formulae (1) to (3). In addition, in the mixed gas, the lithium raw material means lithium sulfide (Li₂S) and other lithium compounds generated in the process of producing lithium sulfide.

Next, the process of producing lithium sulfide by the reaction of the hydrogen sulfide and the lithium raw material (hereinafter, also referred to as a lithium sulfide producing process), and a lithium sulfide generation unit that generates lithium sulfide by a reaction of hydrogen sulfide and a lithium raw material will be described. The lithium sulfide producing process and the lithium sulfide generation unit are known, and are disclosed, for example, in JP2017-222567A (Patent Literature 1) and JP2016-150859A.

Specifically, in the lithium sulfide producing process and the lithium sulfide generation unit, the lithium raw material is continuously or discontinuously supplied into a heated reaction tank, and the lithium raw material is moved in a certain direction in the reaction tank. Further, in the lithium sulfide producing process and the lithium sulfide generation unit, lithium sulfide is continuously or discontinuously produced by continuously or discontinuously supplying the hydrogen sulfide gas into the reaction tank and reacting the lithium raw material with the hydrogen sulfide gas.

### (Hydrogen Sulfide)

Hydrogen sulfide generally reacts with the lithium raw material as a hydrogen sulfide gas to generate lithium sulfide. The hydrogen sulfide gas may be a gas containing only hydrogen sulfide, or may be a gas containing hydrogen sulfide as a main component and other gas components. Here, the main component means a component having the largest content in the gas, and is, for example, 50 vol% or more. In an aspect of the present invention, in order to prevent rapid occurrence of the sulfurization reaction, for example, an inert gas may be mixed with the hydrogen sulfide gas to lower a partial pressure of the hydrogen sulfide.

From this viewpoint, a concentration of the hydrogen sulfide gas is preferably 10 to 100 vol%. The concentration of the hydrogen sulfide gas of 100 vol% means a gas containing only the hydrogen sulfide gas, that is, a pure gas. The concentration of less than 100 vol% means a mixed gas of the hydrogen sulfide gas and an inert gas such as Ar or nitrogen or a reducing gas such as hydrogen.

From the viewpoint of maintaining reactivity with the lithium raw material and appropriately maintaining a gas flow rate in the reaction tank, the concentration of the hydrogen sulfide gas is preferably 10 vol% to 100 vol%. Among these, the concentration of the hydrogen sulfide gas is more preferably 20 vol% or more and 90 vol% or less, and particularly preferably 30 vol% or more and 80 vol% or less.

### (Lithium Raw Material)

The lithium raw material is a raw material serving as a lithium source of lithium sulfide, and examples thereof include lithium hydroxide, lithium carbonate, and lithium oxide. Among these, the lithium hydroxide is preferable from the viewpoint of causing a sulfurization reaction at a low temperature and having excellent stability.

### (Sulfurization Reaction)

When the lithium raw material supplied into the reaction tank is brought into contact with the hydrogen sulfide gas, a sulfurization reaction represented by the formulae (1) to (3) occurs, and lithium sulfide (Li₂S) as a main product and water (H₂O) as a by-product are generated.

When the lithium raw material is brought into contact with the hydrogen sulfide gas in a sufficiently heated state, the reaction further proceeds. At this time, the lithium raw material is preferably heated to a temperature range in which the lithium raw material does not melt.

### (Reaction Tank)

The reaction tank is a facility that provides a space in which the lithium raw material and the hydrogen sulfide gas react, and the shape and size thereof are not limited. An outer shape of the reaction tank is, for example, a rectangular parallelepiped shape, a cylindrical shape, or a polygonal columnar shape and is not limited. The reaction tank may include a stirrer such as a stirring blade that promotes the reaction of the lithium raw material and the hydrogen sulfide gas.

### (Heating of Reaction Tank)

In the lithium sulfide producing process, it is preferable to heat an inside of the reaction tank, particularly a portion with which the lithium sulfide is in contact during movement, and heat the lithium raw material moving in the reaction tank. The lithium raw material in a sufficiently heated state can be brought into contact with the hydrogen sulfide gas to promote the sulfurization reaction.

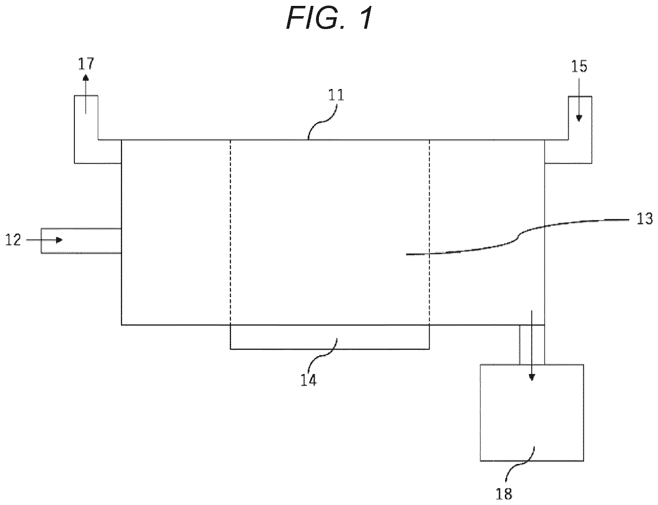

FIG. 1 is a schematic view of a reaction tank 11 for explaining the lithium sulfide producing process and the lithium sulfide generation unit.

Regarding heating the reaction tank 11, as shown in FIG. 1, an intermediate region 13 of the reaction tank 11 as viewed in a moving direction of a lithium raw material 12 is preferably heated by a heating means 14.

By heating in this manner, as shown in FIG. 1, in view of a positional relationship in the movement direction of the lithium raw material 12, the intermediate region 13 in the reaction tank 11 can be set as a region for directly heating the reaction tank 11, and both sides of the intermediate region 13, that is, an upstream region and a downstream region, specifically an inner wall surface of the reaction tank 11 in the regions can be set as a heating region in which a temperature is raised to 100°C or higher. In FIG. 1, the left side is the upstream side, and the right side is the downstream side.

At this time, from the viewpoint of promoting the sulfurization reaction, the temperature of the inner wall surface of the reaction tank 11 in the intermediate region 13 is preferably 200°C to 450°C, and particularly preferably 300°C or higher and 450°C or lower.

Since the temperature of the inner wall surface of the reaction tank 11 in the intermediate region 13 can be considered to be substantially the same as a temperature of the lithium raw material 12, the sulfurization reaction can be sufficiently promoted when the temperature of the inner wall surface of the reaction tank 11 in the intermediate region 13 is 200°C to 450°C.

### (Supply and Movement of Lithium Raw Material into Reaction Tank)

In the lithium sulfide producing process and the lithium sulfide generation unit, as shown in FIG. 1, the lithium raw material 12 can be continuously supplied into the reaction tank 11 and moved in a certain direction in the reaction tank 11.

In addition, the direction in which the lithium raw material 12 is moved in the reaction tank 11 is not limited, for example, a horizontal direction, a vertical direction, a rotation direction, a rotation axis direction, a length direction of the reaction tank 11, or the like. For example, as shown in FIG. 1, the lithium raw material 12 can be moved in the length direction of the reaction tank 11.

### (Supply and Movement of Hydrogen Sulfide Gas into Reaction Tank)

In the lithium sulfide producing process and the lithium sulfide generation unit in the form shown in FIG. 1, hydrogen sulfide 15 is continuously supplied into the reaction tank 11.

In the lithium sulfide producing process and the lithium sulfide generation unit, as shown in FIG. 1, the hydrogen sulfide 15 can be allowed to flow from downstream to upstream along a direction opposite to the movement direction of the lithium raw material 12 in the reaction tank 11.

In the lithium sulfide producing process and the lithium sulfide generation unit, a movement direction of the hydrogen sulfide 15 may be the same as the movement direction of the lithium raw material 12.

At this time, a flow rate of the hydrogen sulfide 15 in the reaction tank 11 is not limited.

Furthermore, in the lithium sulfide producing process and the lithium sulfide generation unit, as shown in FIG. 1, the hydrogen sulfide 15 is preferably supplied into the reaction tank 11 from downstream of a position where the lithium raw material 12 is supplied into the reaction tank 11 in the positional relationship in the movement direction of the lithium raw material 12.

In the positional relationship in the movement direction of the lithium raw material 12, a supply position of the hydrogen sulfide 15 may be provided in the heating region (upstream) or the intermediate region 13.

### (Exhaust)

In the lithium sulfide producing process and the lithium sulfide generation unit, as shown in FIG. 1, water vapor (H₂O) and carbon dioxide (CO₂), which are by-products generated by the sulfurization reaction, and further unreacted hydrogen sulfide gas and the like are exhausted 17 to an outside of the reaction tank 11.

The exhausted unreacted hydrogen sulfide gas can be recovered as elemental sulfur by the Claus process. However, as described above, the exhausted unreacted hydrogen sulfide gas contains a finely powdered lithium raw material, and thus there are problems that the lithium raw material poisons the Claus catalyst and corrodes a metal pipe and the like when the lithium raw material exists together with moisture.

Therefore, an aspect of the present invention includes a process and a device for recovering a mixed gas containing unreacted hydrogen sulfide and a lithium raw material and removing the lithium raw material to purify hydrogen sulfide. Specific methods and means will be described below.

### (Recovery of Lithium Sulfide)

As shown in FIG. 1, the lithium sulfide (Li₂S), which is a main product generated by the sulfurization reaction, is preferably moved to downstream and recovered in a lithium sulfide recovery tank 18.

When the lithium sulfide (Li₂S) is recovered and stored in the lithium sulfide recovery tank 18, a temperature of an inner wall surface of the lithium sulfide recovery tank 18 is preferably heated to 100°C or higher.

The water as a reaction by-product is condensed in the lithium sulfide recovery tank 18, and the lithium sulfide as a reaction product reacts with the condensed water to generate lithium hydroxide, which may reduce the purity of the lithium sulfide.

On the other hand, if the inner wall surface of the lithium sulfide recovery tank 18 is heated as described above, the moisture in the lithium sulfide recovery tank 18 can be gasified so that the moisture no longer exists as water (liquid).

Furthermore, the moisture in the lithium sulfide recovery tank 18 can be volatilized, and thus it is possible to prevent the recovered lithium sulfide from aggregating or adhering to the inner wall surface of the lithium sulfide recovery tank 18.

Furthermore, an inert gas may be supplied into the lithium sulfide recovery tank 18. Accordingly, the moisture can be discharged to the outside of the lithium sulfide recovery tank 18 together with the inert gas.

Next, the process and the device for recovering a mixed gas containing unreacted hydrogen sulfide and a lithium raw material and removing the lithium raw material to purify hydrogen sulfide according to an aspect of the present invention will be described.

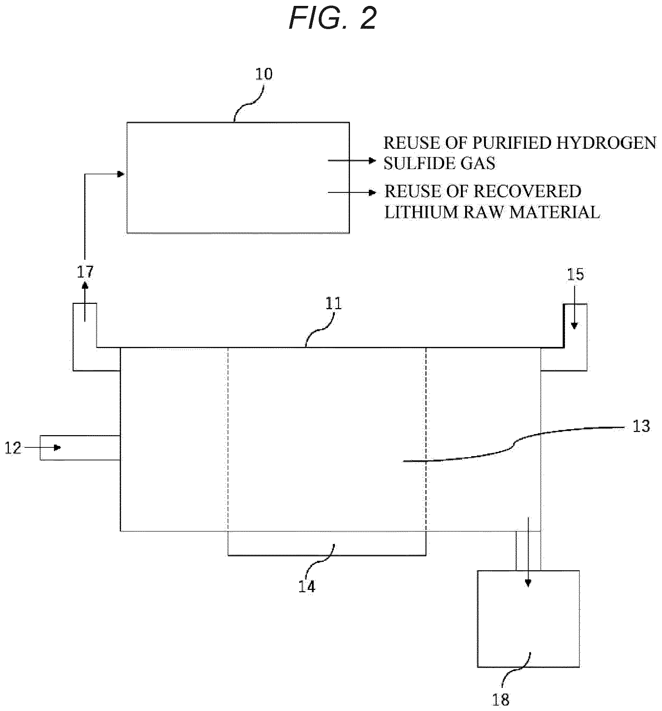

FIG. 2 is a schematic view for explaining the process and the device for recovering a mixed gas containing unreacted hydrogen sulfide and a lithium raw material and removing the lithium raw material to purify hydrogen sulfide.

In FIG. 2, the mixed gas containing the unreacted hydrogen sulfide gas and the lithium raw material exhausted by the lithium sulfide producing process and the lithium sulfide generation unit described in FIG. 1 is recovered in a wet spray tower 10, the lithium raw material is removed from the mixed gas by the hydrogen sulfide purification unit provided in the wet spray tower 10, and thereby the hydrogen sulfide is purified.

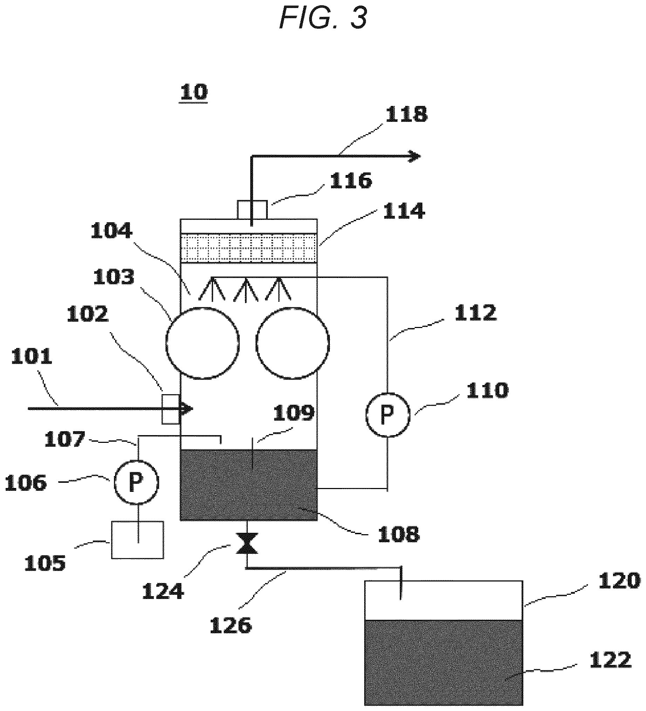

FIG. 3 is a schematic view for explaining the wet spray tower 10 and the hydrogen sulfide purification unit provided in the wet spray tower 10.

In FIG. 3, the wet spray tower 10 mainly includes a mixed gas introduction port 102, a Venturi portion 103, a spray member 104, a cleaning liquid tank 105 for accommodating a cleaning liquid, a demister 114, a gas exhaust port 116 for exhausting a purified hydrogen sulfide gas, and a lithium raw material tank 120 for accommodating a recovered lithium raw material.

### Next, an operation will be described.

A mixed gas 101 containing the unreacted hydrogen sulfide gas and the lithium raw material exhausted by the lithium sulfide producing process and the lithium sulfide generation unit described in FIG. 1 is introduced into the wet spray tower 10 from the mixed gas introduction port 102.

Since the mixed gas 101 contains moisture, a temperature of the mixed gas is preferably adjusted to 100°C to 220°C, and more preferably adjusted to 140°C to 180°C (in the following examples, the temperature of the mixed gas was adjusted to 160°C). By setting the temperature of the mixed gas to 100°C or higher, condensation of moisture in the wet spray tower 10 can be prevented, and by setting the temperature of the mixed gas to 220°C or lower, the cost of components of the wet spray tower 10 can be reduced.

In the wet spray tower 10, a cleaning liquid 108 is sprayed onto the mixed gas 101, the cleaning liquid 108 is brought into contact with the mixed gas 101, and the lithium raw material is removed from the mixed gas 101. The wet spray tower 10 may include a means for reducing a droplet size of the cleaning liquid 108 when the cleaning liquid 108 is brought into contact with the mixed gas 101. By reducing the droplet size of the cleaning liquid 108, a contact frequency between the lithium raw material in the mixed gas 101 and the cleaning liquid 108 is increased, and the lithium raw material can be efficiently removed.

Examples of the means for reducing the droplet size of the cleaning liquid 108 include a means for increasing a flow rate of the mixed gas 101. Examples of the means include the Venturi portion 103 shown in FIG. 3. The flow rate of the mixed gas 101 is increased by the Venturi portion 103, and the droplet size of the cleaning liquid 108 is reduced by a shearing force between the mixed gas 101 and the cleaning liquid 108. Accordingly, the contact frequency between the lithium raw material in the mixed gas 101 and the cleaning liquid 108 is increased, and the lithium raw material can be efficiently removed.

Specifically, the cleaning liquid 108 is sprayed by the spray member 104 to the mixed gas 101 whose flow rate is increased by the Venturi portion 103. The cleaning liquid 108 is atomized by the mixed gas 101 whose flow rate is increased, and comes into contact with the mixed gas 101 in a state in which the droplet size is reduced. The cleaning liquid 108 is stored in a bottom portion of the wet spray tower 10, pumped up by a pump 110, and reaches the spray member 104 through a first cleaning liquid pipe 112.

The cleaning liquid 108 is accommodated in the cleaning liquid tank 105 installed outside the wet spray tower 10, is pumped up by a pump 106, and reaches the bottom portion of the wet spray tower 10 through a second cleaning liquid pipe 107. A pH of the cleaning liquid 108 at the bottom of the wet spray tower 10 is controlled by a pH meter 109.

The cleaning liquid 108 is not particularly limited as long as the cleaning liquid can remove the lithium raw material. Here, "removal" may be removal by dissolving the lithium raw material, or may be removal by dropping the lithium raw material with the cleaning liquid. Among these, the removal by dissolving the lithium raw material is preferable.

Examples of the cleaning liquid 108 include a fluid containing hydrogen sulfide, hydrogen sulfide-containing water, and a hydrogen sulfide-containing organic solvent.

In a case where the hydrogen sulfide-containing water is used, the hydrogen sulfide-containing water is preferably a hydrogen sulfide saturated aqueous solution. A pH of the hydrogen sulfide-containing water is adjusted to preferably 9 or less, more preferably 4 to 9, and still more preferably 4 to 7. Accordingly, an amount of hydrogen sulfide to be used can be reduced, and the lithium raw material can be effectively dissolved and removed.

Calcium chloride can also be added to the cleaning liquid 108. According to the form, the moisture in the purified hydrogen sulfide gas can be reduced.

A concentration of the calcium chloride in the cleaning liquid 108 is preferably 5 to 40 mass%, and more preferably 15 to 40 mass%.

By adding the calcium chloride to the cleaning liquid 108, a concentration of the moisture in the hydrogen sulfide gas can be reduced to, for example, 6 mass% or less.

Subsequently, the mixed gas from which the lithium raw material is removed may pass through the demister 114 to capture the moisture in the hydrogen sulfide gas. As the demister 114, a known demister can be used, and the demister 114 is not particularly limited. For example, examples thereof include a member in which a three-dimensional mesh structure made of a metal wire, a resin, a glass fiber, or the like is laminated for several layers to form a mat shape in order to increase a contact surface with a fluid while maintaining a small pressure loss.

The hydrogen sulfide gas passing through the demister 114, that is, a purified hydrogen sulfide gas 118 is accommodated in a purified hydrogen sulfide gas accommodation unit (not shown) provided outside the wet spray tower 10 via the gas exhaust port 116. A moisture concentration of the purified hydrogen sulfide gas 118 is preferably 10 mass% or less, and more preferably 8 mass% or less.

Further, the dissolved and removed lithium raw material (reference numeral 122) is accommodated in the lithium raw material tank 120 through a valve 124 and a pipe 126.

The purified hydrogen sulfide gas and the recovered lithium raw material can be supplied to the lithium sulfide generation unit as shown in FIG. 2 and reused in the lithium sulfide producing process. In the lithium sulfide producing process, only the purified hydrogen sulfide gas and the recovered lithium raw material may be used, or a new hydrogen sulfide gas or lithium raw material may be additionally mixed and used.

Therefore, according to another aspect of the present invention, provided is a lithium sulfide production device including: a lithium sulfide generation unit configured to generate lithium sulfide by reacting hydrogen sulfide with a lithium raw material; a mixed gas recovery unit configured to recover a mixed gas containing unreacted hydrogen sulfide and a lithium raw material in the lithium sulfide generation unit; a hydrogen sulfide purification unit configured to purify hydrogen sulfide by removing the lithium raw material from the mixed gas; and a hydrogen sulfide supply unit configured to supply the hydrogen sulfide obtained by the hydrogen sulfide purification unit to the lithium sulfide generation unit.

Alternatively, the present invention provides a lithium sulfide production device including: a lithium sulfide generation unit configured to generate lithium sulfide by reacting hydrogen sulfide with a lithium raw material; a mixed gas recovery unit configured to recover a mixed gas containing unreacted hydrogen sulfide and a lithium raw material in the lithium sulfide generation unit; a hydrogen sulfide purification unit configured to purify hydrogen sulfide by removing the lithium raw material from the mixed gas; and a lithium raw material supply unit configured to supply the lithium raw material recovered by the hydrogen sulfide purification unit to the lithium sulfide generation unit.

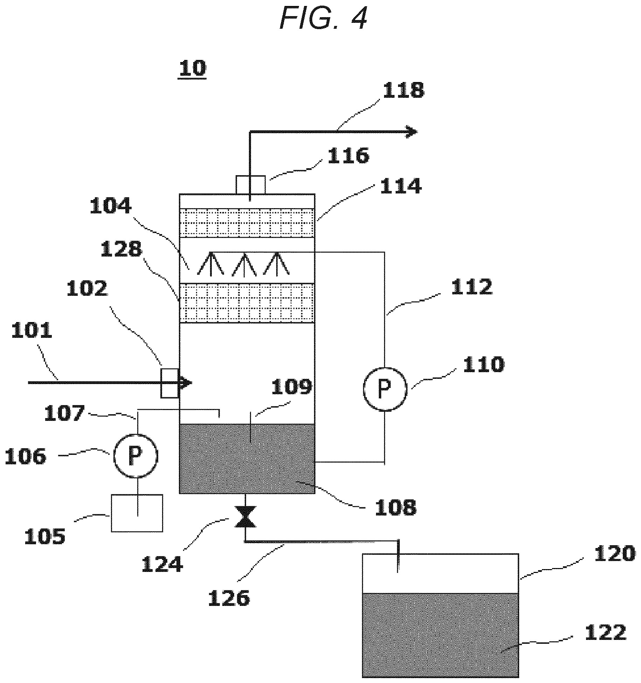

Next, other forms of the hydrogen sulfide purification unit provided in the wet spray tower 10 will be described with reference to FIGs. 4 to 6. The same reference numerals as those in FIG. 3 are the same as those in the wet spray tower 10 shown in FIG. 3, and the description thereof will be omitted.

FIG. 4 shows a form in which a filling layer 128 is newly provided without providing the Venturi portion 103 in the wet spray tower 10 shown in FIG. 3. The filling layer 128 is provided for the purpose of increasing the contact frequency between the mixed gas 101 and the cleaning liquid 108. The filling layer 128 is filled with a filler made of polypropylene.

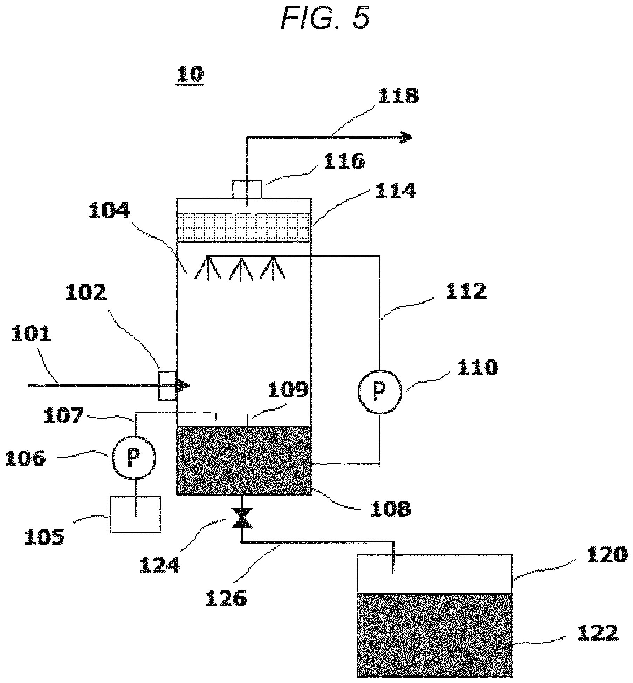

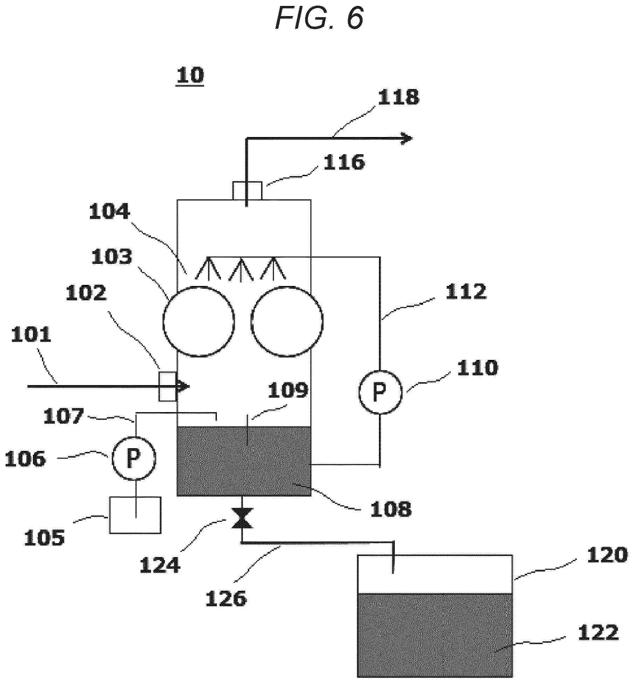

FIG. 5 shows a form in which the Venturi portion 103 is not provided in the wet spray tower 10 shown in FIG. 3. FIG. 6 shows a form in which the demister 114 is not provided in the wet spray tower 10 shown in FIG. 3.

In FIGs. 3 to 6, the forms in which the cleaning liquid is sprayed to the mixed gas as the means for removing the lithium raw material from the mixed gas are described as an example. However, in the present invention, separately from these forms, as the means for removing the lithium raw material from the mixed gas containing the unreacted hydrogen sulfide and the lithium raw material, an amine solution may be brought into contact with the mixed gas, the hydrogen sulfide in the mixed gas may be absorbed into the amine solution, and the hydrogen sulfide may be released from the amine solution into which the hydrogen sulfide is absorbed.

A technique of absorbing hydrogen sulfide into an amine solution is known as a Girbotol method, and is disclosed in JP6204465B, for example. The hydrogen sulfide can be recovered by heating the amine solution (for example, heating at 116°C to 127°C).

### Examples

Hereinafter, the present invention will be described with reference to examples and comparative examples, but the present invention is not limited to the following examples. Examples 1 to 6 are working examples, and Examples 7 and 8 are comparative examples.

### Example 1

### (Production of Lithium Sulfide)

Lithium sulfide was produced using the device shown in FIG. 1.

Lithium hydroxide having an average particle diameter of 200 µm was used as a lithium raw material, and a temperature of an inner wall surface of a reaction tank (a rotary kiln) in an intermediate region was set to 300°C.

The lithium raw material was continuously supplied into the reaction tank, and a hydrogen sulfide gas was continuously supplied into the reaction tank at downstream of the lithium raw material while the lithium raw material was moved from upstream to downstream in the reaction tank. In the reaction tank, a reaction of the hydrogen sulfide gas and the lithium raw material was promoted by stirring (with stirring blades).

In the above process, a mixed gas containing unreacted hydrogen sulfide and the lithium raw material was generated, and was recovered in the wet spray tower 10 as shown in FIG. 2. The lithium raw material was removed from the mixed gas by a hydrogen sulfide purification unit provided in the wet spray tower 10, and hydrogen sulfide was purified. A concentration of the lithium compound (LiOH, Li₂S, or the like) in the mixed gas was measured by the method described in JIS Z8808 2013 and found to be 25 µg/Nm³.

As the wet spray tower 10, one having the form shown in FIG. 3 was adopted.

A temperature at which mixed gas 101 was introduced into the wet spray tower 10 was 160°C.

A hydrogen sulfide saturated aqueous solution having a pH of 4.5 was used as the cleaning liquid 108.

A flow rate of the mixed gas 101 introduced into the wet spray tower 10 was increased by the Venturi portion 103, and the cleaning liquid 108 was sprayed by the spray member 104.

Subsequently, the mixed gas from which the lithium raw material was removed passed through the demister 114, and moisture in the hydrogen sulfide gas was captured to obtain purified hydrogen sulfide gas 118. The gas 118 was accommodated in a purified hydrogen sulfide gas accommodation unit (not shown) provided outside the wet spray tower 10 via the gas exhaust port 116. A moisture concentration of the purified hydrogen sulfide gas 118 was 8 mass%, and the concentration of the lithium compound was less than 1 µg/Nm³.

After the completion of the above process, various pipes provided in the wet spray tower 10 were examined, and adhesion of the lithium compound was not confirmed.

In addition, when sulfur was recovered from the purified hydrogen sulfide gas 118 by the Claus process, the sulfur generation efficiency did not change, and poisoning to the catalyst was not confirmed.

### Example 2

Example 1 was repeated except that "with stirring blade" was changed to "without stirring blade" in Example 1. The results are shown in Table 1.

### Example 3

Example 1 was repeated except that the wet spray tower 10 without the Venturi portion 103 shown in FIG. 5 was used in Example 1. The results are shown in Table 1.

### Example 4

Example 1 was repeated except that the wet spray tower 10 provided with the filling layer 128 shown in FIG. 4 was used in Example 1. The results are shown in Table 1.

### Example 5

Example 1 was repeated except that the wet spray tower 10 without the demister 114 shown in FIG. 6 was used in Example 1. The results are shown in Table 1.

### Example 6

Example 1 was repeated except that calcium chloride was added to the cleaning liquid 108 at a concentration of 30 mass% in Example 1. The results are shown in Table 1.

### Example 7

Example 1 was repeated except that the cleaning liquid 108 was not sprayed by the spray member 104 in Example 1. The results are shown in Table 1. In Example 7, since the cleaning liquid was not sprayed, the concentration of the lithium compound in the gas having passed through the wet spray tower 10 was not measured.

### Example 8

Example 1 was repeated except that "with stirring blade" was changed to "without stirring blade" in Example 7. The results are shown in Table 1. In Example 8, since the cleaning liquid was not sprayed, the concentration of the lithium compound in the gas having passed through the wet spray tower 10 was not measured.

**Table 1**

| | Li₂S Synthesis | Li compound concentration in mixed gas (µm/Nm³) | Wet spray tower | Cleaning liquid | Li compound concentration in purified hydrogen sulfide gas (µm/Nm³) | Adhesion of Li compound to pipe | Poisoning of catalyst |
|---|---|---|---|---|---|---|---|
| Ex. 1 | With stirring blade | 25 | FIG. 3 | Hydrogen sulfide saturated aqueous solution | Less than 1 | Absent | Absent |
| Ex. 2 | Without stirring blade | 15 | FIG. 3 | Hydrogen sulfide saturated aqueous solution | Less than 1 | Absent | Absent |
| Ex. 3 | With stirring blade | 25 | FIG. 5 | Hydrogen sulfide saturated aqueous solution | Less than 1 | Absent | Absent |
| Ex. 4 | With stirring blade | 25 | FIG. 4 | Hydrogen sulfide saturated aqueous solution | Less than 1 | Absent | Absent |
| Ex. 5 | With stirring blade | 25 | FIG. 6 | Hydrogen sulfide saturated aqueous solution | Less than 1 | Absent | Absent |
| Ex. 6 | With stirring blade | 25 | FIG. 3 | Hydrogen sulfide saturated aqueous solution (with addition of calcium chloride) | Less than 1 | Absent | Absent |
| Ex. 7 | With stirring blade | 25 | FIG. 3 | - | - | Present | Present |
| Ex. 8 | Without stirring blade | 15 | FIG. 3 | - | - | Present | Present |

From the results shown in Table 1, it was found that in each of the working examples, since the lithium raw material was removed from the mixed gas, poisoning of the Claus catalyst was prevented, and since adhesion of the lithium compound to the pipe was not confirmed, corrosion of the metal pipe was also prevented.

On the other hand, in Examples 7 and 8, the lithium raw material was not removed from the mixed gas. As a result, poisoning of the Claus catalyst was confirmed, and corrosion of the metal pipe was also a concern.

Although various embodiments have been described above with reference to the drawings, it is needless to say that the present invention is not limited to such examples. It is obvious for a person skilled in the art that various modifications and variations can be made within the range described in the scope of claims and it is understood that such modifications and variations naturally belong to the technical scope of the present invention. Further, the components described in the above embodiment may be combined in any manner without departing from the gist of the invention.

The present application is based on Japanese Patent Application No. 2021-161521 filed on September 30, 2021, and contents thereof are incorporated herein by reference.

### REFERENCE SIGNS LIST

10 wet spray tower
11 reaction tank
12 lithium raw material
13 intermediate region
14 heating means
15 hydrogen sulfide
17 exhaust
18 lithium sulfide recovery tank
101 mixed gas
102 mixed gas introduction port
103 Venturi portion
104 spray member
105 cleaning liquid tank
106 pump
107 second cleaning liquid pipe
108 cleaning liquid
109 pH meter
110 pump
112 first cleaning liquid pipe
114 demister
116 gas exhaust port
118 hydrogen sulfide gas
120 lithium raw material tank
124 valve
126 pipe
128 filling layer

## Claims

1. A hydrogen sulfide purification method comprising removing a lithium raw material from a mixed gas which is generated in a process of producing lithium sulfide by a reaction of hydrogen sulfide and the lithium raw material and comprises unreacted hydrogen sulfide and the lithium raw material.

2. The hydrogen sulfide purification method according to claim 1, wherein a cleaning liquid is brought into contact with the mixed gas to remove the lithium raw material from the mixed gas.

3. The hydrogen sulfide purification method according to claim 2, wherein the cleaning liquid comprises hydrogen sulfide.

4. The hydrogen sulfide purification method according to claim 2 or 3, wherein the cleaning liquid comprises calcium chloride.

5. The hydrogen sulfide purification method according to any one of claims 2 to 4, wherein the cleaning liquid has a pH of 4 to 9.

6. The hydrogen sulfide purification method according to any one of claims 2 to 5, the method further comprising reducing a droplet size of the cleaning liquid.

7. The hydrogen sulfide purification method according to claim 6, wherein a flow rate of the mixed gas is increased to reduce the droplet size of the cleaning liquid by a shearing force between the mixed gas and the cleaning liquid.

8. The hydrogen sulfide purification method according to any one of claims 2 to 7, wherein a moisture in the mixed gas from which the lithium raw material is removed is 10 mass% or less.

9. The hydrogen sulfide purification method according to claim 1, wherein an amine solution is brought into contact with the mixed gas, the hydrogen sulfide in the mixed gas is absorbed into the amine solution, and the hydrogen sulfide is released from the amine solution into which the hydrogen sulfide is absorbed.

10. A lithium sulfide production method comprising reacting hydrogen sulfide comprising hydrogen sulfide obtained by the hydrogen sulfide purification method according to any one of claims 1 to 9 with a lithium raw material to produce lithium sulfide.

11. A lithium sulfide production method comprising reacting a lithium raw material comprising a lithium raw material recovered by the hydrogen sulfide purification method according to any one of claims 1 to 9 with hydrogen sulfide to produce lithium sulfide.

12. A hydrogen sulfide purification device comprising:
a lithium sulfide generation unit configured to generate lithium sulfide by reacting hydrogen sulfide with a lithium raw material;
a mixed gas recovery unit configured to recover a mixed gas comprising unreacted hydrogen sulfide and the lithium raw material in the lithium sulfide generation unit; and
a hydrogen sulfide purification unit configured to purify the hydrogen sulfide by removing the lithium raw material from the mixed gas.

13. A lithium sulfide production device comprising:
a lithium sulfide generation unit configured to generate lithium sulfide by reacting hydrogen sulfide with a lithium raw material;
a mixed gas recovery unit configured to recover a mixed gas comprising unreacted hydrogen sulfide and the lithium raw material in the lithium sulfide generation unit;
a hydrogen sulfide purification unit configured to purify the hydrogen sulfide by removing the lithium raw material from the mixed gas; and
a hydrogen sulfide supply unit configured to supply the hydrogen sulfide obtained by the hydrogen sulfide purification unit to the lithium sulfide generation unit.
